# EUROPÄISCHE PATENTSCHRIFT

(11) **EP 2 640 882 B1**
(45) Veröffentlichungstag und Bekanntmachung des Hinweises auf die Patenterteilung: **22.07.2015**
(21) Anmeldenummer: 11784492.8
(22) Anmeldetag: 17.11.2011
(51) Int. Cl.: B29C 47/00, D04H 1/732

(54) **VORRICHTUNG ZUM TROCKENFORMEN EINER FASERBAHN**
DEVICE FOR DRY-FORMING A FIBROUS WEB
DISPOSITIF DE FORMATION À SEC D'UNE BANDE FIBREUSE

(30) Priorität: 19.11.2010 DE 102010052010
(43) Veröffentlichungstag der Anmeldung: 25.09.2013
(73) Patentinhaber: Oerlikon Textile GmbH & Co. KG, 42897 Remscheid (DE)
(72) Erfinder: SCHWARZ, Olaf, 24536 Neumünster (DE); MÄHLMANN, Ingo, 25524 Itzehoe (DE)
(74) Vertreter: Neumann, Ditmar
(86) Internationale Anmeldenummer: PCT/EP2011/070366
(87) Internationale Veröffentlichungsnummer: WO 2012/066083

(56) Entgegenhaltungen:
- EP-A1- 0 536 904
- WO-A1-03/016605
- DE-A1- 2 149 892
- US-A- 4 276 248
- US-A- 5 445 777

## Beschreibung

Die Erfindung betrifft eine Vorrichtung zum Trockenformen einer Faserbahn gemäß dem Oberbegriff des Anspruchs 1.

Zur Herstellung von Faservliesen ist es bekannt, dass die Fasern mittels eines Luftstromes auf einem Ablageband zu einer Faserschicht abgelegt werden. Dieses in Fachkreisen üblicherweise als Airlaid bezeichnetes Verfahren basiert darauf, dass die Fasern oder Fasergemische mittels eines Formierungskopfes gleichmäßig verteilt auf die Oberfläche eines Ablagebandes gelegt werden. Die durch den Formierungskopf überdeckte Zone auf dem Ablageband wird üblicherweise als Formierungszone bezeichnet, in welcher die Fasern auf das Ablageband treffen.

Eine derartige Vorrichtung ist beispielsweise aus der EP 0 006 696 A1 bekannt.

Bei der bekannten Vorrichtung wird eine Vielzahl von Fasern oder Fasergemischen mittels eines Luftstromes einem Formierungskopf zugeführt. Innerhalb des Formierungskopfes sind Mittel vorgesehen, um die Fasern zu vermischen und zu verteilen. An der Unterseite des Formierungskopfes ist ein Formierungsauslass ausgebildet, der üblicherweise mit kurzem Abstand oberhalb des Ablagebandes angeordnet ist. Hierbei bildet sich zwischen dem Formierungskopf und dem Ablageband ein Freiraum, der zur Führung eines aus dem Formierungsauslass austretenden Faserstromes dient. Die Ablage der Fasern auf dem Ablageband wird durch eine Absaugeinrichtung unterstützt, die die Luft des Faserstromes aufnimmt und abführt. Die sich an der Oberfläche des Ablagebandes bildende Faserschicht wird über das Ablageband kontinuierlich aus der Formierungszone herausgeführt, so dass eine Faserschicht entsteht, die anschließend einer Weiterbehandlung beispielsweise einer Verfestigung zugeführt wird.

Die Ablage der Fasern ist hierbei im Wesentlichen durch die erzeugten Luftströme in der Formierungszone bestimmt. Bei der bekannten Vorrichtung sind dem Formierungskopf an der Einlaufseite des Ablagebandes und auf der Auslaufseite des Ablagebandes jeweils Dichtungsmittel in Form von Dichtwalzen zugeordnet, um einen zwischen dem Formierungsauslass und dem Ablageband gebildeten Freiraum gegenüber der Umgebung abzuschirmen. Die Dichtwalzen wirken mit seitlichen an den Längsseiten des Ablagebandes angeordneten Gehäuseteilen zusammen, um somit den Eintritt von sekundären Luftströmen aus der Umgebung zu vermeiden. In Praxis hat sich jedoch herausgestellt, dass je nach Fasertyp und Fasergröße Unregelmäßigkeiten in der Ablage der Fasern einstellten, die als sogenannte Wolkenbildung (beaching) bezeichnet wird. Insoweit wird vermutet, dass die durch die Absaugeinrichtung erzeugten Saugströme zu Unregelmäßigkeiten in der Faserablage führen können.

Um derartige Unregelmäßigkeiten in der Ablage der Fasern zu eliminieren, ist beispielsweise aus der WO 2006/131122 A1 bekannt, die Saugströmung der Absaugeinrichtung in Teilbereichen der Formierungszone zu beeinflussen. Bei der bekannten Vorrichtung ist hierzu auf einer Einlaufseite der Formierungszone der Absaugeinrichtung ein Leitblech zugeordnet, das unterhalb des Ablagebandes den Saugstrom beeinflusst. Damit sollen insbesondere Luftturbulenzen auf der Einlaufseite der Formierungszone vermieden werden, die durch angesaugte Sekundärluft aus der Umgebung entstehen. Hieraus resultieren jedoch unterschiedliche Saugströmungen in der Formierungszone, die zu unterschiedlichen Ablageverhalten der Fasern innerhalb der Formierungszone führen. Aus der DE 21 49 892 A1 ist auch eine Vorrichtung zum Verteilen von schwebenden Fasern bekannt, bei der am Einlass eine Klappe mit einer beweglichen Rolle zur Abdichtung gegenüber der Umgebung dient. Ein zusätzlicher Luftstrom am Einlass ist nicht vorgesehen, da die Klappe nur dadurch gehalten wird, dass die Rolle auf einer Faserbahn rollt.

Es ist somit Aufgabe der Erfindung, eine gattungsgemäße Vorrichtung zum Trockenformen einer Faserbahn zu schaffen, mit welcher eine hohe Gleichmäßigkeit der Faserverteilung innerhalb der Faserschicht erreicht werden kann.

Diese Aufgabe wird erfindungsgemäß durch die Merkmalskombination des Anspruchs 1 gelöst. Vorteilhafte Weiterbildungen der Erfindung sind in den Merkmalen und Merkmalskombinationen der jeweiligen Unteransprüche definiert.

Die Erfindung liegt die Erkenntnis zugrunde, dass bei Ablage der Fasern auf das quer zum Formierungsauslass bewegte Ablageband eine Umorientierung der Fasern aus einer Vertikalbewegung in eine durch das Ablageband definierte Horizontalbewegung erfolgen muss. So wurde festgestellt, dass durch eine kontrollierte Zuführung eines Sekundärluftstromes auf der Einlaufseite die Umorientierung und damit die Ablage der Fasern derart positiv beeinflusst werden konnte, dass eine Vergleichmäßigung der Ablage der Fasern eintrat. Insoweit bietet die Einlassöffnung mit einem einstellbaren Einströmungsquerschnitt den Vorteil, eine auf den Fasertyp und die Fasergröße abgestimmte Zufuhr eines Sekundärluftstromes aus der Umgebung in die Formierungszone hinein zu ermöglichen. Durch den auf der Einlaufseite eintretenden Sekundärluftstrom erhalten die Fasern vorteilhaft eine Beschleunigung in Laufrichtung des Ablagebandes, was zur Begünstigung der Umorientierung führt. Zudem wird dadurch erreicht, dass die im Bereich der Einlaufseite austretenden Fasern aus dem Formierungsauslass gegenüber den im Bereich der Auslaufseite austretenden Fasern innerhalb des Freiraumes unterschiedlich lange Freistrecken durchlaufen. Damit erhalten insbesondere die Fasern im Einlaufbereich eine längere Zeit innerhalb des Freiraumes zur Umorientierung in Laufrichtung des Ablagebandes. Diese Effekte wirken sich besonders positiv auf eine gleichmäßige Ablage und damit eine gleichmäßig erzeugte Faserbahn aus. Um eine individuelle Einstellung des Sekundärluftstromes zu ermöglichen, wird bei der erfindungsgemäßen Vorrichtung das Dichtungsmittel an der Einlaufseite durch einen bewegliches Dichtblech gebildet ist, welches mit seiner jeweiligen Stellung relativ zum Ablageband den freien Einströmungsquerschnitt der Einlassöffnung bestimmt. So lässt sich der Einströmungsquerschnitt der Einlassöffnung stufenlos einstellen. Hierzu wird vorzugsweise vorgeschlagen, das Dichtblech an einer Schwenkachse zu halten, die sich mit Abstand quer zum Ablageband erstreckt. Damit ist eine Einstellung der Einlassöffnung im Bereich von einem geschlossenen Zustand bis hin zu einem maximal geöffneten Zustand möglich.

Um auf der Auslaufseite des Ablagebandes möglichst keinerlei aus der Umgebung eintretende Sekundärluftströme zu erhalten, ist das Dichtungsmittel auf der Auslaufseite gemäß einer vorteilhaften Weiterbildung der Erfindung durch eine Dichtwalze gebildet, welche mit einer Umfangsgeschwindigkeit antreibbar ist. So kann die Dichtwalze möglichst mit geringem Kontakt an der Oberfläche der gelegten Faserbahn gehalten werden. Hierbei ist die Umfangsgeschwindigkeit der Dichtwalze vorzugsweise gleich groß einer Bandgeschwindigkeit des Ablagebandes. Damit lassen sich ungewünschte Relativgeschwindigkeiten zwischen der Dichtwalze und der Faserbahn vermeiden.

Um zu gewährleisten, dass die Dichtwalze relativ zum Ablageband jeweils die für die Faserbahn optimale Stellung aufweist, ist desweiteren vorgesehen, die Dichtwalze relativ zum Ablageband höhenverstellbar auszubilden. Damit lässt sich zu jeder Dicke der Faserbahn eine optimierte Abdichtung der Formierungszone auf der Auslaufseite des Ablagebandes einstellen.

Damit die eingestellte Spalthöhe zwischen der Dichtwalze und dem Ablageband während des Betriebes unverändert bleibt, ist desweiteren vorgeschlagen, der Dichtwalze ein Reinigungsmittel zuzuordnen, durch welches die Oberfläche der Dichtwalze reinigbar ist. So können Anhaftungen von einzelnen Faserteilchen am Umfang der Dichtwalze vermieden werden. Derartige Reinigungsmittel können beispielsweise unmittelbar durch Kontakt mittels eines Schabers oder kontaktlos mittels einer Absaugung ausgeführt sein.

Die Längsseiten der Formierungszone werden vorteilhaft durch Dichtwände gegenüber der Umgebung abgeschirmt, wobei die Dichtwände an der Einlaufseite ein über die Formierungszone hinausragendes Wandende aufweisen. Damit lassen sich bei Eintritt des Sekundärluftstromes die erzeugten Randwirbeleffekte aus der Formierungszone fernhalten. Alternativ besteht auch die Möglichkeit, dass die Wandenden der Dichtwände an den Längsseiten verlängerbar ausgebildet sind, so dass je nach Größe des Einströmungsquerschnittes der Einlassöffnung unterschiedlich lange Dichtwände eingestellt werden können.

Um unterschiedliche Einstellungen in der Breite der Formierungszone vornehmen zu können, ist desweiteren vorgeschlagen, die Dichtwände zu Einstellung einer Ablagebreite quer zum Ablageband verstellbar auszubilden.

Eine weitere besonders vorteilhafte Weiterbildung der Erfindung sieht vor, dass die Absaugeinrichtung unterhalb der Formierungszone mehrere Luftleitmittel aufweist, durch welche ein Saugprofil in Wandlaufrichtung einstellbar ist. Damit können zusätzliche Ablageeffekte und Vergleichmäßigungen bei Ablage der Fasern zu der Faserbahn erzeugt werden. Ebenso ist insbesondere damit der angesaugte Sekundärluftstrom veränderbar.

Um unterschiedlichste Fasertypen und Fasergrößen zu Faserbahnen ablegen zu können, ist desweiteren vorgesehen, dass der Formierungskopf relativ zum Ablageband höhenverstellbar ausgebildet ist.

Die erfindungsgemäße Vorrichtung ist somit zur Ablage jeglicher Fasern und Fasergemischen geeignet. So lassen sich synthetische oder natürliche Fasern oder Gemische aus synthetischen und natürlichen Fasern zu Faserlagen ablegen. Durch die hohe Gleichmäßigkeit der erzeugten Faserlage können dabei bevorzugt auch feinste Teile wie beispielsweise ein Pulver vorteilhaft in dem Gemisch integriert sein.

Die erfindungsgemäße Vorrichtung wird nachfolgend anhand einiger Ausführungsbeispiele unter Bezug auf die beigefügten Figuren näher erläutert.

Es stellen dar:
- Fig. 1: schematisch eine Querschnittansicht eines ersten Ausführungsbeispiels der erfindungsgemäßen Vorrichtung
- Fig. 2: schematisch eine Draufsicht des Ausführungsbeispiels aus Fig. 1 ohne Formierungskopf
- Fig. 3: schematisch eine Draufsicht eines weiteren Ausführungsbeispiels der erfindungsgemäßen Vorrichtung ohne Formierungskopf

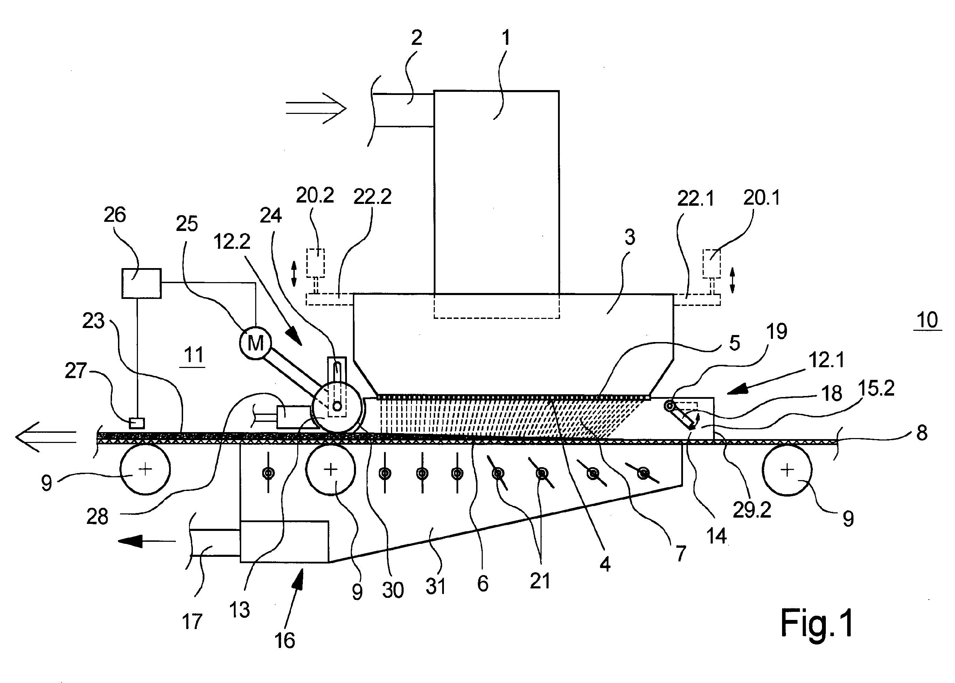

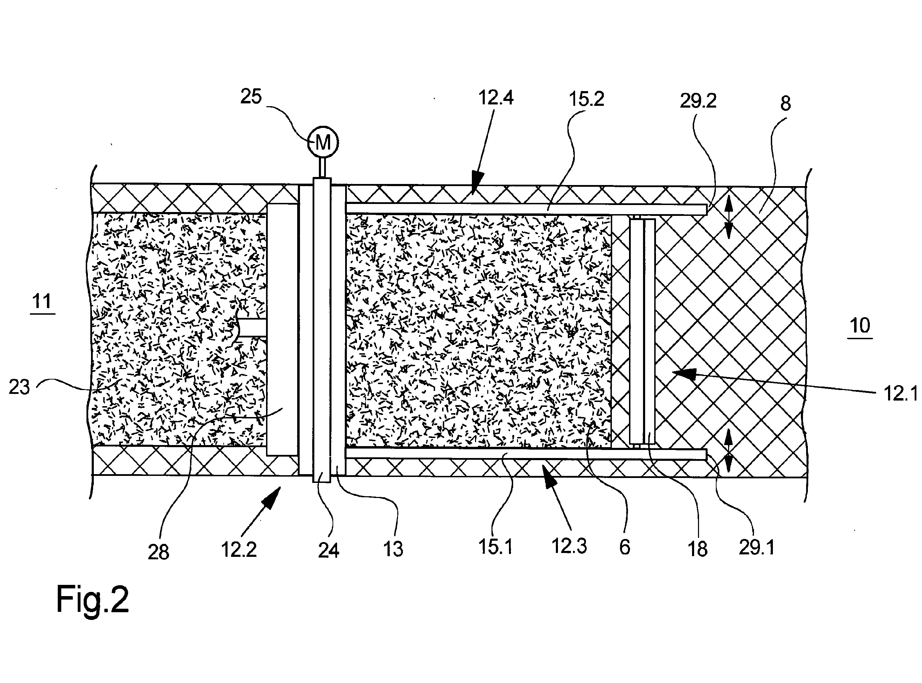

In den Fig. 1 und 2 ist schematisch ein erstes Ausführungsbeispiel der erfindungsgemäßen Vorrichtung gezeigt. In Fig. 1 ist das Ausführungsbeispiel schematisch in einer Querschnittansicht und in Fig. 2 schematisch in einer Draufsicht ohne Formierungskopf dargestellt. Insoweit kein ausdrücklicher Bezug zu einer der Figuren gemacht ist, gilt die nachfolgende Beschreibung für beide Figuren.

Das Ausführungsbeispiel zeigt eine Mischkammer 1, die über einen Faserzulauf 2 mit einer hier nicht dargestellten Faserzuführung verbunden ist. Der Faserzulauf 2 kann ein oder mehrere Anschlüsse beinhalten, um ein oder mehrere Fasern oder Fasergemische mittels eines Luftstromes der Mischkammer 1 zuzuführen. Die Mischkammer 1 ist an einer Unterseite mit einem Formierungskopf 3 verbunden. Der Formierungskopf 3 weist mehrere hier nicht näher dargestellte Mittel auf, um die Fasern oder Fasergemisch zu verteilen und gleichmäßig über einen an der Unterseite ausgebildeten Formierungsauslass 4 als Faserstrom abzuführen. Der Formierungsauslass 4 weist vorzugweise ein Siebblech 5 oder ein gespanntes Siebgewebe auf. Dabei erfolgt die Verteilung innerhalb des Formierungskopfes 3 bevorzugt über mehrere angetriebene Flügel, wie beispielsweise aus der WO 2004/106604 bekannt. Insoweit wird an dieser Stelle auf die zuvor genannte Druckschrift Bezug genommen.

Der Formierungskopf 3 ist oberhalb eines Ablagebandes 8 derart angeordnet, dass sich der Formierungsauslass 4 parallel oberhalb des Ablagebandes 8 erstreckt. Das im wesentlichen horizontal ausgerichtete Ablageband 8 ist gasdurchlässig ausgeführt und wird über mehrere Führungswalzen 9 kontinuierlich in eine Materialförderrichtung geführt, die durch einen Doppelpfeil gekennzeichnet ist. Insoweit durchläuft das Ablageband 8 kontinuierlich eine Formierungszone 6 von einer Einlaufseite 10 bis hin zu einer Auslaufseite 11. Dabei werden die Fasern in der Formierungszone 6 an der Oberfläche des Ablagebandes 8 zu einer Faserschicht 23 abgelegt.

Der Formierungsauslass 4 des Formierungskopfes 3 ist in diesem Fall rechteckig ausgebildet, so dass sich die Formierungszone 6 oberhalb des Ablagebandes 8 ebenfalls rechteckig ist. Ein zwischen dem Formierungsauslass 4 und dem Ablageband 8 gebildeter Freiraum 7 der Formierungszone 6 ist gegenüber der Umgebung durch mehrere Dichtungsmittel 12.1 bis 12.4 abgeschirmt. Das auf der Einlaufseite 10 angeordnete Dichtungsmittel 12.1 bildet gegenüber dem Ablageband 8 eine freie Einlassöffnung 14, durch welche der Freiraum 7 der Formierungszone 6 unmittelbar mit der Umgebung verbunden ist. Die Einlassöffnung 14 bildet einen freien Einströmungsquerschnitt, um ein Einströmen eines Sekundärluftstromes aus der Umgebung zu ermöglichen. Zur Einstellung eines bestimmten Einströmquerschnittes ist das Dichtungsmittel 12.1 in diesem Ausführungsbeispiel durch ein bewegliches Dichtblech 18 gebildet. Insoweit wird durch die jeweilige Stellung des Dichtbleches 18 relativ zum Ablageband 8 ein bestimmter Einströmungsquerschnitt der Einlassöffnung 14 eingestellt. Das Dichtblech 8 ist hierzu an einer Schwenkachse 19 gehalten, die sich quer zum Ablageband 8 erstreckt. Das Dichtblech 18 lässt sich an der Schwenkachse 19 stufenlos zwischen einer geschlossenen Stellung und einer Maximalöffnung einstellen. Die Maximalöffnung des Dichtbleches 18 ist in Fig. 1 gestrichelt eingezeichnet.

Der Freiraum 7 an der Formierungszone 6 wird auf der Auslaufseite 11 durch das Dichtungsmittel 12.2 gegenüber der Umgebung abgeschirmt. Das Dichtungsmittel 12.2 ist hierzu als eine angetriebene Dichtwalze 13 ausgebildet. Die Dichtwalze 13 ist in einem Walzengestell 24 höhenverstellbar gehalten. Somit lässt sich die Dichtwalze 13 in ihrer Lage relativ zum Ablageband 8 stufenlos einstellen, um eine auf die Dicke der Faserschicht angepasste Abschirmung zu erhalten. Die Dichtwalze 13 wird über einen Walzenmotor 25 angetrieben, der in einer Steuereinrichtung 26 gekoppelt ist. Der Steuereinrichtung 26 ist ein Sensor 27 zugeordnet, der die jeweilige Bandgeschwindigkeit des Ablagebandes 8 erfasst. Insoweit lässt sich die Dichtwalze 13 mit einer Umfangsgeschwindigkeit antreiben, die gleich groß der Bandgeschwindigkeit des Ablagebandes 8 ist. Damit lässt sich die Oberfläche der Dichtwalze 13 und die Oberfläche der Faserschicht 23 mit gleicher Geschwindigkeit ohne jegliche Relativbewegung zueinander führen.

Zur Einhaltung einer zwischen dem Ablageband 8 und der Dichtwalze 13 eingestellten Spalthöhe ist der Dichtwalze 13 ein Reinigungsmittel 28 zugeordnet. Das Reinigungsmittel 28 ist in diesem Ausführungsbeispiel als eine Absaugung ausgeführt, um anhaftende Faserpartikel an der Oberfläche der Dichtwalze 13 kontinuierlich abzunehmen.

Der Freiraum 7 der Formierungszone 6 wird zu beiden Längsseiten durch die Dichtungsmittel 12.3 und 12.4 gegenüber der Umgebung abgeschirmt, die durch zwei parallel angeordnete Dichtwände 15.1 und 15.2 gebildet sind. Die Dichtwände 15.1 und 15.2 erstrecken sich hierbei zwischen einer Oberseite des Ablagebandes 8 und einer Unterseite des Formierkopfes 3. Gegenüber der Dichtwalze 13 bilden die Dichtwände 15.1 und 15.2 jeweils einen Freilaufspalt 30. Die gegenüberliegenden Wandenden 29.1 und 29.2 sind länger ausgebildet und überragen die Formierungszone 6. Damit lassen sich bevorzugt beim Eintreten eines Sekundärluftstromes aus der Umgebung auftretende Randverwirbelungserscheinungen vorteilhaft in einen unkritischen Bereich außerhalb der Formierungszone 6 hin verlagern. Zur Einstellung einer Ablagebreite der Formierungszone 6 sind die Dichtwände 15.1 und 15.2 quer zum Ablageband 8 verstellbar ausgebildet. Hierbei erfolgt ein Austausch des Dichtungsmittels 12.1, um ein auf die jeweilige Ablagebreite angepasste Einlassöffnung zu bilden.

Unterhalb des Ablagebandes 8 ist eine Absaugeinrichtung 16 angeordnet, die über einen Saugkanal 17 mit einer hier nicht dargestellten Unterdruckquelle verbunden ist. Die Absaugeinrichtung 16 bildet unterhalb des Ablagebandes 8 eine Saugkammer 31, in welcher mehrere der Unterseite des Ablagebandes 8 zugeordnete Luftleitmittel 21 zugeordnet sind. Die Luftleitmittel 21 sind in diesem Ausführungsbeispiel durch verstellbare Drosselklappen gebildet, die unabhängig voneinander einstellbar sind, so dass über die Länge der Formierungszone 6 ein Saugprofil einstellbar ist. Hierbei lassen sich insbesondere durch die der Einlaufseite 10 zugeordnete Luftleitmittel 21 die durch die Einlassöffnung 14 einströmende Sekundärluftstroms beeinflussen.

Bei dem in Fig. 1 und 2 dargestellten Ausführungsbeispiel der erfindungsgemäßen Vorrichtung wird beispielsweise ein Gemisch aus synthetischen Fasern mit einem Pulver gemeinsam über einen Luftstrom der Mischkammer 1 zugeführt. Innerhalb der Mischkammer 1 können statische oder dynamische Mittel ausgebildet sein, die eine Vorvermischung der Fasern ausführen. Anschließend wird das Gemisch aus Faser und Pulver über den Luftstrom in den Formierungskopf 3 geführt. Innerhalb des Formierungskopfes 3 erfolgt über die Verteilmittel eine Verteilung des Faser-Pulvergemisches, der anschließend über den Formierungsauslass 4 als ein Faserstrom den Freiraum 7 geführt wird. Innerhalb der Formierungszone 6 wird über die Absaugeinrichtung 16 ein ständig wirkender Saugstrom erzeugt, der einerseits die in den Freiraum 7 eintretenden Fasern erfasst und andererseits einen an der Einlaufseite 10 eintretenden Sekundärluftstrom aus der Umgebung bewirkt, der durch die Einlassöffnung 14 strömt. Bei der Führung der Fasern innerhalb des Freiraumes 7 erhalten die Fasern des Faserstromes im Bereich der Einlaufseite 10 eine Beschleunigung in Bandlaufrichtung des Ablagebandes 8 mit der Wirkung, dass die Fasern eine länger Freistrecke bis zu Ablage auf dem Ablageband 8 durchlaufen und bereits eine Vororientierung erhalten, die die Umorientierung der Fasern aus einer Vertikalbewegung in einer Horizontalbewegung begünstigt. Demgegenüber erhalten die Fasern auf der gegenüberliegenden Auslaufseite 11 keine wesentliche Beschleunigung, so dass die im Verhältnis zu den Fasern auf der Einlaufseite 10 eine kürzere Freistrecke durchlaufen. So lassen sich die Fasern durch Einfluss eines Sekundärluftstromes auf der Einlaufseite bereits mit einer leichten Vororientierung in Materialflussrichtung ablegen. Dies stellt sich insbesondere bei der Bildung einer gleichmäßigen Faserschicht 23 als besonders vorteilhaft heraus.

Auf der gegenüberliegenden Auslaufseite 11 des Formierungskopfes 3 wird das Einsaugen einer Sekundärluft durch die Dichtwalze 13 vermieden. Insoweit bleibt in der Formierungszone 6 nur der Einfluss der über die Einlassöffnung 14 zugelassenen Sekundärluft, die gezielt zur Verbesserung der Faserlagen einsetzbar ist.

Die erfindungsgemäße Vorrichtung hat sich besonders geeignet, um eine hohe Gleichmäßigkeit bei der Erzeugung von Faserschichten zu erreichen, die aus einer Vielzahl einzelner endlicher Faserstücke gebildet ist. Hierbei können synthetische oder natürliche oder Gemische von synthetischen und natürlichen Fasern gelegt werden.

Je nach Fasergröße und Fasertyp lässt sich der Abstand zwischen dem Formierungsauslass 4 und dem Ablageband 8 vorteilhaft dadurch verändern, in dem der Formierungskopf 3 höhenverstellbar ausgebildet ist. Zur Höhenverstellung können beispielsweise zwei Aktoren 20.1 und 20.2 verwendet werden, die jeweils an einen Tragarm 22.1 und 22.2 angreifen, die fest mit dem Formierungskopf 3 verbunden sind. In Fig. 1 sind die Aktoren 20.1 und 20.2 sowie die Tragarme 22.1 und 22.2 gestrichelt dargestellt. Dabei lässt sich die Abdichtung der Formierungszone 6 bei größeren Abständen zwischen dem Formierungsauslass 4 und dem Ablageband 8 vorteilhaft durch zusätzliche Dichtwände zu allen Seiten der Formierungszone 6 hin erweitern.

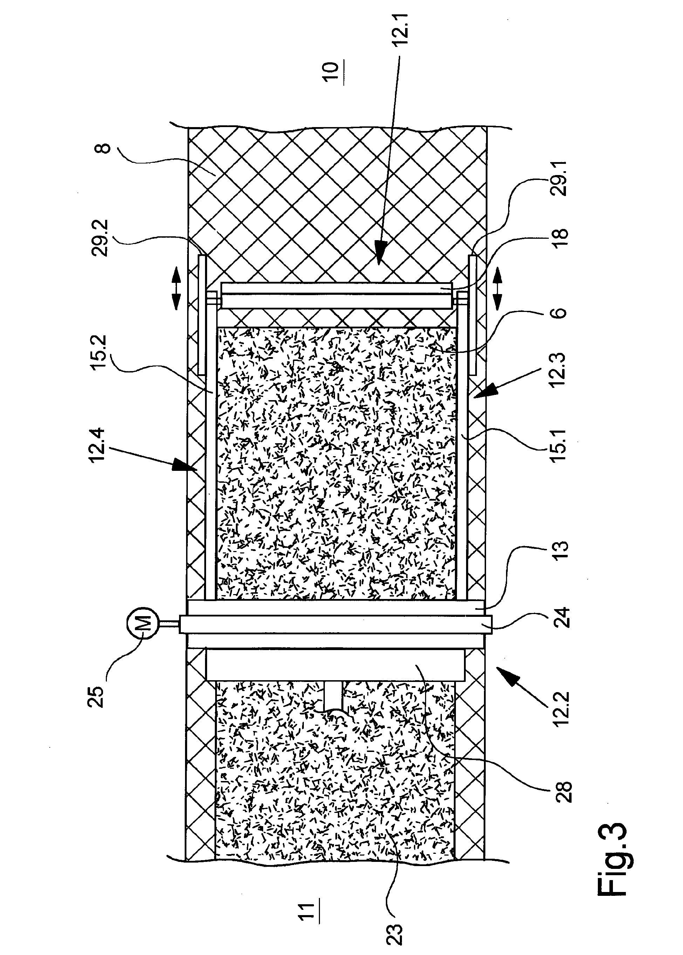

Um insbesondere beim Eintreten des Sekundärluftstromes auf der Einlaufseite der Formierungszone zu optimieren, ist in Fig. 3 ein weiteres Ausführungsbeispiel der erfindungsgemäßen Vorrichtung in einer Draufsicht der Formierungszone 6 dargestellt. Das Ausführungsbeispiel ist im Wesentlichen identisch zu dem Ausführungsbeispiel nach Fig. 1 und Fig. 2, so dass nachfolgend nur die Unterschiede erläutert werden und ansonsten Bezug zu der vorgenannten Beschreibung genommen wird. So ist das Ausführungsbeispiel in der Querschnittansicht identisch zu dem Ausführungsbeispiel nach Fig. 1.

Bei dem in Fig. 3 dargestellten Ausführungsbeispiel sind die Dichtungsmittel 12.3 und 12.4 an den Längsseiten der Formierungszone 6 ebenfalls durch Dichtwände 15.1 und 15.2 gebildet. Die Dichtwände 15.1 und 15.2 weisen gegenüber der Einlaufseite 10 jeweils verstellbare Wandenden 29.1 und 29.2 auf. Die Wandenden 29.1 und 29.2 lassen sich in Abhängigkeit von der jeweils eingestellten Einlassöffnung 14 stufenlos verlängern, so dass vorteilhaft Luftturbulenzen des Sekundärluftstromes bei Eintritt in die Formierungszone 6 vermieden werden.

Bei de in dem Ausführungsbeispiel nach Fig. 1 bis 3 dargestellten Dichtungsmitteln zur Abschirmung der Formierungszone und zur Bildung einer Einlassöffnung sind beispielhaft. Grundsätzlich könnte beispielsweise die Dichtwalze auf der Auslaufseite durch ein Blech mit einer elastischen Dichtlippe gebildet sein. Ebenso könnte die Einlassöffnung auf der Einlaufseite einfache Drosselklappen oder durch lamellenförmige Dichtungsmittel gebildet werden. Wesentlich für die erfindungsgemäße Vorrichtung ist, dass ein definierter oder einstellbarer Sekundärluftstrom auf der Einlaufseite erzeugt werden kann.

### Bezugszeichenliste

- 1: Mischkammer
- 2: Faserzulauf
- 3: Formierungskopf
- 4: Formierungsauslass
- 5: Siebblech
- 6: Formierungszone
- 7: Freiraum
- 8: Ablageband
- 9: Führungswalzen
- 10: Einlaufseite
- 11: Auslauf seite
- 12.1, 12.2, 12.3, 12.4: Dichtungsmittel
- 13: Dichtwalze
- 14: Einlassöffnung
- 15.1, 15.2: Dichtwand
- 16: Absaugeinrichtung
- 17: Saugkanal
- 18: Dichtblech
- 19: Schwenkachse
- 20.1, 20.2: Aktor
- 21: Luftleitmittel
- 22.1, 22.2: Tragarm
- 23: Faserschicht
- 24: Walzengestell
- 25: Walzenmotor
- 26: Steuereinrichtung
- 27: Sensor
- 28: Reinigungsmittel
- 29.1, 29.2: Wandende
- 30: Freilaufspalt
- 31: Saugkammer

## Patentansprüche

1. Vorrichtung zum Trockenformen einer Faserbahn mit einem Formierungskopf (3), dem eine Vielzahl von Fasern oder Fasergemischen mittels eines Luftstroms zuführbar ist und der einen Formierungsauslass (4) zur Erzeugung eines aus Fasern und Luft gebildeten Faserstroms aufweist, und mit einem luftdurchlässigem Ablageband (8) zum Auffangen und Abtransportieren der Fasern, das mit einer Absaugeinrichtung (16) zur Erzeugung einer Saugströmung zusammenwirkt, wobei zwischen dem Formierungsauslass (4) des Formierungskopfes (3) und dem Ablageband (8) eine Formierungszone (6) mit einem Freiraum (7) gebildet ist und wobei der Freiraum (7) durch Dichtungsmittel (12.1, 12.2, 12.3, 12.4) gegenüber der Umgebung abgeschirmt ist,
**dadurch gekennzeichnet, dass**
das auf einer Einlaufseite (10) angeordnete Dichtungsmittel (12.1) zur kontrollierten Zuführung eines Sekundärluftstromes relativ zum Ablageband (8) eine Einlassöffnung (14) mit einem einstellbaren Einströmungsquerschnitt gegenüber der Umgebung bildet, wobei das Dichtungsmittel (12.1) durch ein bewegliches Dichtblech (18) gebildet ist, welches mit seiner jeweiligen Stellung relativ zum Ablageband (8) einen freien Einströmungsquerschnitt der Einlassöffnung (14) bestimmt..

2. Vorrichtung nach Anspruch 1,
**dadurch gekennzeichnet, dass**
das Dichtblech (18) an einer Schwenkachse (1) gehalten ist, die sich mit Abstand quer zum Ablageband (8) erstreckt.

3. Vorrichtung nach einem der Ansprüche 1 oder 2,
**dadurch gekennzeichnet, dass**
das gegenüberliegende Dichtungsmittel (12.2) auf der Auslaufseite (11) durch eine Dichtwalze (13) gebildet ist, welche mit einer Umfangsgeschwindigkeit antreibar ist.

4. Vorrichtung nach Anspruch 3,
**dadurch gekennzeichnet, dass**
die Umfangsgeschwindigkeit der Dichtwalze (13) gleich groß einer Bandgeschwindigkeit des Ablagebandes (8) ist.

5. Vorrichtung nach Anspruch 3 oder 4,
**dadurch gekennzeichnet, dass**
die Dichtwalze (13) relativ zum Ablageband (8) höhenverstellbar ausgebildet ist.

6. Vorrichtung nach einem der Ansprüche 3 bis 5,
**dadurch gekennzeichnet, dass**
der Dichtwalze (13) ein Reinigungsmittel (28) zugeordnet ist, durch welches die Oberfläche der Dichtwalze (13) reinigbar ist.

7. Vorrichtung nach einem der Ansprüche 1 bis 6,
**dadurch gekennzeichnet, dass**
die an gegenüberliegenden Längsseiten angeordneten Dichtungsmittel (12.3, 12.4) durch seitliche Dichtwände (15.1, 16.2) gebildet sind, die an der Einlaufseite (10) jeweils ein über die Formierungszone hinausragendes Wandende (29.1, 29.2) und/oder ein frei verlängerbares Wandende (29.1, 29.2) aufweisen.

8. Vorrichtung nach Anspruch 7,
**dadurch gekennzeichnet, dass**
die Dichtwände (15.1, 15.2) zur Einstellung einer Ablagebreite quer zum Ablageband (8) verstellbar ausgebildet sind.

9. Vorrichtung nach einem der Ansprüche 1 bis 8,
**dadurch gekennzeichnet, dass**
der Formierungskopf (3) relativ zum Ablageband (8) höhenverstellbar ausgebildet ist.

10. Vorrichtung nach einem der Ansprüche 1 bis 9,
**dadurch gekennzeichnet, dass**
die Absaugeinrichtung (16) unterhalb der Formierungszone (6) mehrere Luftleitmittel (21) aufweist, durch welche ein Saugprofil in Bandlaufrichtung einstellbar ist.

## Claims

1. A device for the dry-forming of a fibrous web having a forming head (3), to which a plurality of fibers or fiber mixtures can be fed via an air flow, and including a forming outlet (4) for the generation of a fiber flow formed of fibers and air, and having an air permeable deposit belt (8) for receiving and transporting the fibers, which acts together with a suction device (16) for the generation of a suction flow, wherein a forming zone (6) having an empty space (7) is formed between the forming outlet (4) of the forming head (3) and the deposit belt (8), and wherein the empty space (7) is shielded from the surrounding environment is formed at a sealing means (12.1, 12.2, 12.3, 12.4), **characterized in that**
a feed opening (14) having an adjustable inflow cross-section in relation to the surrounding environment is formed at a sealing means (12.1) for a controlled supplying of a secondary air flow to the entry end, disposed at the entry end (10) in relation to the deposit belt (8), wherein the sealing means (12.1) at the entry end (10) is formed by means of a moveable sealing plate (18), which defines the inflow cross-section of the feed opening (14) with its respective setting in relation to deposit belt (8).

2. The device according to Claim 1 , **characterized in that** the sealing plate (18) is mounted on a pivotal axis (1), which extends transversally to the deposit belt (8) with a spacing thereto.

3. The device according to Claim 1 or 2, **characterized in that** opposing the sealing means (12.2) at the outlet end (11) is formed by a sealing roller (13), which can be driven at a circumferential speed.

4. The device according to Claim 3, **characterized in that** the circumferential speed of the sealing roller (13) is the same as the belt speed of the deposit belt (8).

5. The device according to Claim 3 or 4, **characterized in that** the sealing roller (13) is designed such that it can be adjusted in terms of height in relation to the deposit belt (8).

6. The device according to one of the Claims 3 - 5, **characterized in that** a cleaning agent (28) is associated with the sealing roller (13), by means of which the surface of the sealing roller (13) can be cleaned.

7. The device according to one of the Claims 1 - 6, **characterized in that** the sealing means (12.3, 12.4) disposed on opposite longitudinal surfaces are formed by lateral sealing walls (15.1, 15.2), each include an entry end (10), a wall end (29.1, 29.2).

8. The device according to Claim 7, **characterized in that** the sealing walls (15.1, 15.2) are designed such that they can be adjusted transversally to the deposit belt (8) for the adjustment of a deposit width.

9. The device according to Claims 1 - 8, **characterized in that** the forming head (3) is designed such that it can be adjusted in terms of it height in relation to the deposit belt (8).

10. The device according to one of the Claims 1 - 9, **characterized in that** the suction device (16) includes numerous air guidance means (21) beneath the forming zone (6), by means of which a suction profile can be adjusted in the direction of the running of the belt.

## Revendications

1. Dispositif de formage à sec d'une bande fibreuse comprenant une tête de formage (3) à laquelle peut être acheminée une pluralité de fibres ou de mélanges de fibres au moyen d'un flux d'air, et qui présente une sortie de formage (4) pour générer un courant de fibres constitué de fibres et d'air, et comprenant une bande de dépose perméable à l'air (8) pour collecter et évacuer les fibres, laquelle coopère avec un dispositif d'aspiration (16) pour générer un écoulement d'aspiration, une zone de formage (6) étant formée avec un espace libre (7) entre la sortie de formage (4) de la tête de formage (3) et la bande de dépose (8), et l'espace libre (7) étant protégé vis-à-vis de l'environnement par des moyens d'étanchéité (12.1, 12.2, 12.3, 12.4),
**caractérisé en ce que**
le moyen d'étanchéité (12.1), disposé sur un côté d'entrée (10), pour l'alimentation contrôlée d'un flux d'air secondaire par rapport à la bande de dépose (8), forme une ouverture d'entrée (14) avec une section transversale d'afflux ajustable vis-à-vis de l'environnement, le moyen d'étanchéité (12.1) étant formé par une tôle d'étanchéité mobile (18) qui définit par sa position respective par rapport à la bande de dépose (8) une section transversale libre d'afflux de l'ouverture d'entrée (14).

2. Dispositif selon la revendication 1,
**caractérisé en ce que**
la tôle d'étanchéité (18) est retenue au niveau d'un axe de pivotement (1) qui s'étend à distance de la bande de dépose (8) transversalement à celle-ci.

3. Dispositif selon l'une quelconque des revendications 1 ou 2,
**caractérisé en ce que**
le moyen d'étanchéité opposé (12.2) est formé sur le côté de sortie (11) par un cylindre d'étanchéité (13) qui peut être entraîné avec une vitesse périphérique.

4. Dispositif selon la revendication 3,
**caractérisé en ce que**
la vitesse périphérique du cylindre d'étanchéité (13) est identique à une vitesse de bande de la bande de dépose (8).

5. Dispositif selon la revendication 3 ou 4,
**caractérisé en ce que**
le cylindre d'étanchéité (13) est réalisé de manière réglable en hauteur par rapport à la bande de dépose (8).

6. Dispositif selon l'une quelconque des revendications 3 à 5,
**caractérisé en ce**
**qu'**un moyen de nettoyage (28) est associé au cylindre d'étanchéité (13), par le biais duquel la surface du cylindre d'étanchéité (13) peut être nettoyée.

7. Dispositif selon l'une quelconque des revendications 1 à 6,
**caractérisé en ce que**
les moyens d'étanchéité (12.3, 12.4) disposés sur des côtés longitudinaux opposés sont formés par des parois d'étanchéité latérales (15.1, 16.2) qui présentent, au niveau du côté d'entrée (10), à chaque fois une extrémité de paroi (29.1, 29.2) faisant saillie au-delà de la zone de formage et/ou une extrémité de paroi (29.1, 29.2) pouvant être prolongée librement.

8. Dispositif selon la revendication 7,
**caractérisé en ce que**
les parois d'étanchéité (15.1, 15.2) sont réalisées de manière réglable transversalement à la bande de dépose (8) pour l'ajustement d'une largeur de dépose.

9. Dispositif selon l'une quelconque des revendications 1 à 8,
**caractérisé en ce que**
la tête de formage (3) est réalisée de manière réglable en hauteur par rapport à la bande de dépose (8).

10. Dispositif selon l'une quelconque des revendications 1 à 9,
**caractérisé en ce que**
le dispositif d'aspiration (16) présente, en dessous de la zone de formage (6), plusieurs moyens de guidage d'air (21) par le biais desquels un profil d'aspiration peut être ajusté dans la direction d'avance de la bande.
